Europäisches Patentamt

European Patent Office

Office européen des brevets

(19)

(11) Numéro de publication: **0 082 085**
**B1**

(12) **FASCICULE DE BREVET EUROPEEN**

(45) Date de publication du fascicule du brevet:
**10.04.85**

(21) Numéro de dépôt: **82402298.2**

(22) Date de dépôt: **14.12.82**

(51) Int. Cl.⁴: **A 21 C 15/00,** A 21 C 9/04

(54) Machine permettant la fabrication de produits enduits tels que biscuits ou autres.

(30) Priorité: **16.12.81 FR 8123788**

(43) Date de publication de la demande:
**22.06.83 Bulletin 83/25**

(45) Mention de la délivrance du brevet:
**10.04.85 Bulletin 85/15**

(84) Etats contractants désignés:
**BE CH DE IT LI NL**

(56) Documents cités:
**US - A - 3 340 824**
**US - A - 4 162 882**

(73) Titulaire: **BISCUITERIE NANTAISE - BN, Avenue Lotz-Cosse (près du Bd Alexandre Millerand), F-44200 Nantes (FR)**

(72) Inventeur: **Cossé, Lionel, 13, rue de Belleville, F-44100 Nantes (FR)**

(74) Mandataire: **Phélip, Bruno et al, c/o Cabinet Harlé & Phélip 21, rue de la Rochefoucauld, F-75009 Paris (FR)**

EP 0 082 085 B1

ACTORUM AG

**Description**

La présente invention concerne les machines permettant la fabrication de produits qui sont enduits d'une matière ci-après dénommée fourrage, tels qu'en particulier les biscuits comportant entre deux éléments de pâte cuite identiques une épaisseur de crème, de chocolat ou de confiture.

Les machines actuellement utilisées sont généralement constituées d'un poste d'alimentation des biscuits destinés à constituer le fond du sandwich, débitant sur un dispositif transporteur, lequel poste d'alimentation est situé en amont d'un poste de dépose rotatif d'axe perpendiculaire au sens du déplacement du transporteur et surplombant celui-ci, ce poste de dépose comprenant une alimentation en produit à enduire, que pour des raisons de simplification on dénommera fourrage, et des lumières de distribution lorsque celles-ci passent au-dessus des biscuits, ledit poste étant généralement prévu pour traiter deux chaînes parallèles de biscuits. Un deuxième poste d'alimentation, situé en aval du poste de dépose rotatif, distribue sur chaque biscuit enduit un deuxième biscuit constituant le dessus du sandwich. La rapidité de défilement des biscuits sur le dispositif convoyeur et le faible intervalle entre les différents postes d'intervention impliquent en particulier une alimentation parfaitement régulière des postes amont et aval, les biscuits devant se présenter au-dessus du dispositif convoyeur en position horizontale et au rythme désiré, l'insuffisance passagère d'alimentation pouvant faire prendre aux biscuits une mauvaise position nuisant à leur distribution correcte, un tassement exagéré ou bourrage pouvant également entraîner une détérioration d'une série de biscuits, l'irrégularité de distribution se traduisant d'autre part par un décalage du produit enduit avec le biscuit à enduire et entre les biscuits constituant le fond et le dessus du sandwich. Une autre difficulté réside dans la régularité de la dépose du fourrage. Cette difficulté provient principalement de ce que ce fourrage peut subir des variations dues à des changements de température, par exemple; il est donc indispensable d'obtenir cette régularité de dosage de la quantité de fourrage déposé sur chaque biscuit, la durée de fonctionnement journalier d'une machine et les cadences de production de plus en plus élevées n'autorisant aucune défection de fonctionnement de ce poste de dépose du produit. Les machines actuellement utilisées comportent toutes une alimentation unique du dispositif rotatif de dépose: celle-ci s'effectue généralement dans l'axe d'un cylindre fixe comportant des lumières disposées selon une génératrice de ce cylindre et espacées d'une distance correspondant à l'écartement des files de biscuits sur le dispositif convoyeur. Concentriquement à ce cylindre de distribution est monté un distributeur rotatif comportant, répartis radialement d'une manière uniforme, plusieurs groupes de buses disposées selon des génératrices à un intervalle correspondant à celui des lumières du cylindre de distribution; ces buses, dans leur rotation, mettent en communication lesdites lumières avec la face du biscuit à enduire. Un dispositif obturateur disposé coaxialement au cylindre de distribution et au distributeur rotatif permet, par une rotation d'amplitude limitée, d'obturer les lumières du cylindre de distribution afin d'arrêter la dépose du fourrage dès l'apparition d'un défaut dans l'exécution de cette opération. C'est ainsi qu'entre autres est connue la machine décrite dans le brevet US No 884710 déposé par la société Peters Machinery Company. Dans celle-ci, le fourrage pénétrant par une des extrémités du cylindre de distribution doit théoriquement être distribué selon un débit égal par l'une et l'autre des lumières du cylindre. En réalité, leur positionnement en série n'assure pas cette équivalence de débit, une prédominance s'établissant au niveau de la lumière la plus proche de l'extrémité du cylindre par laquelle s'effectue l'alimentation en fourrage de celui-ci. Pour y remédier, la société Peters décrit, dans le brevet US No 3340824, un dispositif de répartition en fourrage entre les lumières de distribution, incorporé au dispositif d'obturation. Ce dispositif de répartition canalise le fourrage vers les lumières par l'intermédiaire d'un volume annulaire situé approximativement à mi-distance de celle-ci, le flux de fourrage se scindant à partir de ce volume annulaire en deux cordons de section semi-circulaire aboutissant à chacune des lumières. Un tel dispositif n'assure pas l'égalité de débit escompté, une prédominance s'établissant au niveau de la lumière la plus éloignée de l'extrémité du cylindre par laquelle s'effectue l'alimentation en fourrage de celui-ci, l'acheminement du fourrage vers la lumière la plus proche de cette extrémité du cylindre s'effectuant à contre-courant. Enfin, dans le brevet US No 4162882, la société Peters décrit un perfectionnement apporté au dispositif obturateur visant à obtenir une répartition du flux de fourrage proportionnellement à la distance séparant les lumières de diffusion du cylindre de distribution et l'orifice d'admission d'extrémité dudit cylindre. L'obturateur proprement dit, réalisé en forme de segment cylindrique, comporte à cet effet un usinage mettant en priorité et progressivement en communication la lumière la plus éloignée de l'orifice d'admission de fourrage du cylindre de distribution avec les buses correspondantes du distributeur rotatif, la lumière la plus proche étant encore obturée, cette disposition permettant, entre les positions ouverte et fermée de la vanne, d'obtenir la répartition désirée. Ces machines, en raison des inconvénients ci-dessus exposés, ne peuvent donner satisfaction à haute cadence de fabrication.

La machine suivant l'invention permet d'éviter ces inconvénients. Avec celle-ci, il est en effet possible d'obtenir une équivalence de débit des flux d'enduction à chacune des buses du distributeur rotatif, ainsi qu'une régularité de ceux-ci quelle que soit la rapidité de défilement des biscuits sous le poste de dépose de fourrage, lequel débit est réglé en fonction de la vitesse de translation du dispositif convoyeur.

La machine objet de l'invention comporte, groupés sur un même bâti, autant de dispositifs convoyeurs à chaînes transporteuses qu'il y a de files de produits à enduire, chacun de ces convoyeurs desservant dans l'ordre de leur intervention un poste amont d'alimentation en produits à enduire, un poste de dépose de fourrage et un poste aval d'alimentation en produits à enduire. Les postes de dépose de fourrage sont constitués par un cylindre de distribution fixe supporté à chacune de ses extrémités par deux appuis solidaires du bâti de la machine. Ce cylindre comporte, disposées sur une de ses génératrices, autant de lumières de distribution de fourrage qu'il y a de files de produits à enduire, l'espace entre ces lumières correspondant à l'écartement des files. Le cylindre est fermé à l'une de ses extrémités par un palier et à l'autre extrémité par une boîte ou tubulure d'alimentation en fourrage formant également palier; à l'intérieur du cylindre et coaxialement à celui-ci est monté un dispositif d'obturation en appui dans chacun des paliers d'extrémité du cylindre, la rotation duquel obturateur selon une amplitude limitée permet de stopper la distribution de fourrage en venant recouvrir les lumières du cylindre. Ce dispositif obturateur monobloc est composé d'une partie centrale s'ajustant dans l'alésage du cylindre et prolongée, du côté boîte d'alimentation du cylindre, par un arbre creux tourillonnant dans le palier de ladite boîte et, du côté opposé, par un arbre tourillonnant dans l'autre palier d'extrémité du cylindre. L'arbre creux constitue le prolongement d'un alésage axial de la partie centrale de l'obturateur, l'extrémité duquel alésage débouche sur le cylindrage extérieur de ladite partie centrale par une lumière de forme et de dimensions identiques à celles du cylindre de distribution. L'autre extrémité de l'arbre creux tourillonnant dans le palier de la boîte d'alimentation est en liaison avec une arrivée de fourrage à l'aide d'une manchette souple de raccordement. Une deuxième arrivée de fourrage est connectée, à l'aide également d'une manchette souple de raccordement, sur un piquage oblique prévu sur la boîte d'alimentation du cylindre de distribution; cette arrivée de fourrage débite dans le volume annulaire compris entre l'alésage dudit cylindre et l'arbre creux de l'obturateur, lequel volume est destiné à alimenter la lumière du cylindre la plus proche de la boîte d'alimentation, les bagues d'étanchéité placées à chaque extrémité du cylindrage de la partie centrale interdisant, en conjugaison avec les qualités d'ajustement tournant de ce cylindre dans l'alésage du cylindre, tout passage de fourrage vers la lumière dudit cylindre la plus éloignée de la boîte d'alimentation, cette dernière étant, elle, alimentée par l'alésage axial de la partie centrale. De même, il est également prévu une bague d'étanchéité dans le palier de la boîte d'alimentation supportant l'extrémité de l'arbre creux, afin d'éviter toute fuite de fourrage vers l'extérieur. Cette partie centrale est prolongée, côté boîte d'alimentation et sur une certaine longueur, par un secteur cylindrique, la longueur duquel permet d'obturer en totalité la lumière de distribution en liaison avec le volume annulaire du cylindre dans cette zone. Cette obturation ainsi que celle de l'autre lumière s'obtiennent simultanément par une rotation angulaire limitée de l'ensemble du dispositif obturateur, sous l'action d'un vérin pneumatique agissant sur l'arbre d'extrémité de celui-ci; la rapidité d'intervention du vérin commandé par l'arrêt de la machine permet d'interrompre instantanément la dépose de fourrage dès qu'apparaît une quelconque défectuosité dans le déroulement de cette opération. Coaxialement au cylindre de distribution est monté un distributeur rotatif comportant, sur un certain nombre de génératrices également distantes radialement, des buses de diffusion disposées selon un intervalle égal à celui des lumières du cylindre de distribution, la rotation du distributeur mettant successivement en regard les différentes buses avec les lumières correspondantes du cylindre; des bagues d'étanchéité sont intercalées entre le distributeur et le cylindre, afin d'éviter toute fuite de fourrage vers l'extérieur. Le distributeur rotatif est accouplé à chacune de ses extrémités à un manchon cylindrique, l'un d'entre eux assurant l'entraînement en rotation et portant à cet effet un pignon denté, les deux manchons tourillonnant à chacune de leurs extrémités sur des bagues d'usure en Ertalène intercalées entre lesdits manchons et le cylindre de distribution. La synchronisation de la vitesse de rotation du distributeur avec la vitesse de défilement des produits à enduire est obtenue au moyen d'une chaîne unique engrenant, d'une part, avec le pignon du manchon d'entraînement du distributeur et, d'autre part, avec le pignon d'entraînement du dispositif convoyeur des produits. Le réglage du débit des flux d'enduction, afin d'obtenir une épaisseur uniforme de fourrage quelle que soit la vitesse de défilement des produits à enduire, est assuré par la synchronisation de la vitesse de rotation des pompes volumétriques alimentant le cylindre de distribution avec la vitesse d'entraînement des chaînes des dispositifs convoyeurs; cette synchronisation est réalisée par une liaison mécanique entre l'arbre d'entraînement de ces chaînes et le pignon d'entraînement du distributeur rotatif, laquelle liaison comporte entre autres un embrayage et un variateur. L'embrayage permet, au démarrage, de faire fonctionner les pompes seules jusqu'à l'arrivée correcte du fourrage aux buses de diffusion du distributeur rotatif avant toute arrivée de produits à enduire; le variateur permet d'ajuster en marche le rapport entre le débit de fourrage et le débit de produits. D'autre part, un dispositif de régulation permet de maintenir en amont des pompes la pression constante nécessaire à leur bon fonctionnement.

Les dessins annexés illustrent, à titre d'exemple, un mode de réalisation d'une machine conforme à la présente invention. Ceux-ci représentent:

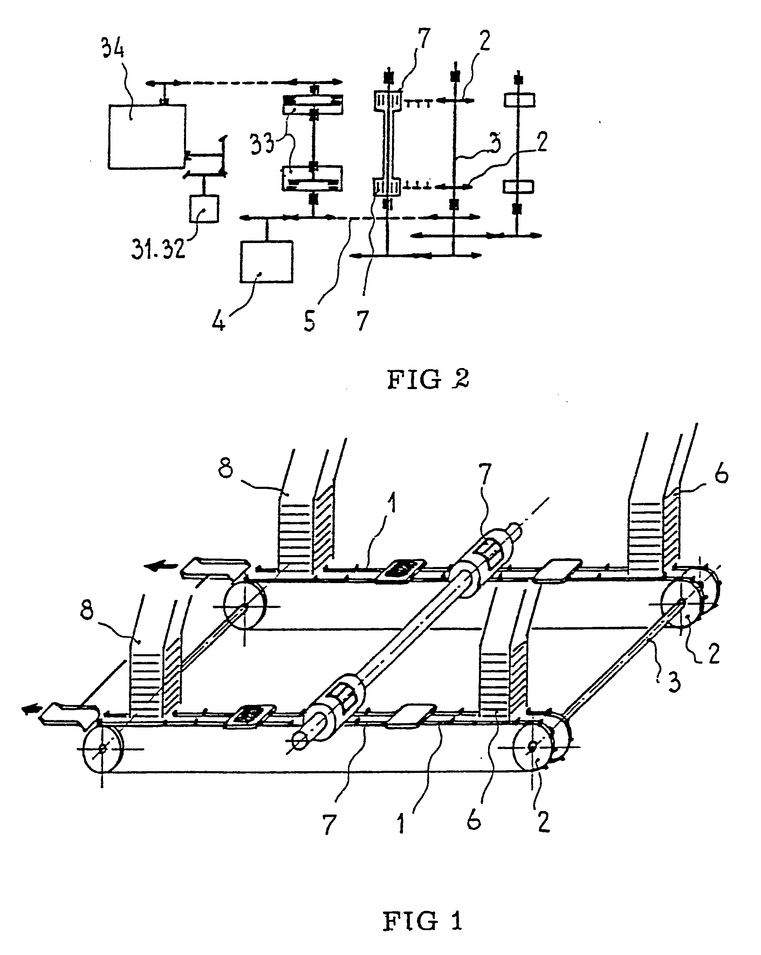

en fig. 1, une vue schématique de l'ensemble de la machine,

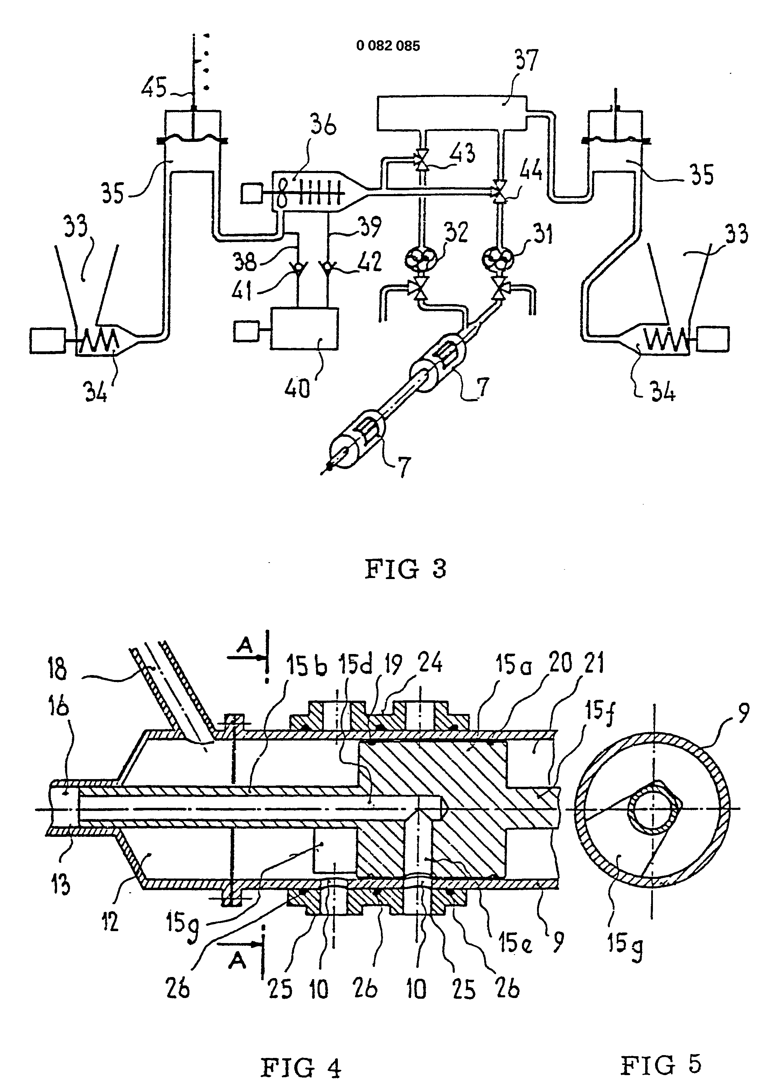

en fig. 2, une vue schématique de la chaîne cinématique de la machine, illustrant le dispositif de synchronisation de l'entraînement en rotation des pompes d'alimentation en fourrage avec l'entraînement des chaînes des dispositifs convoyeurs,

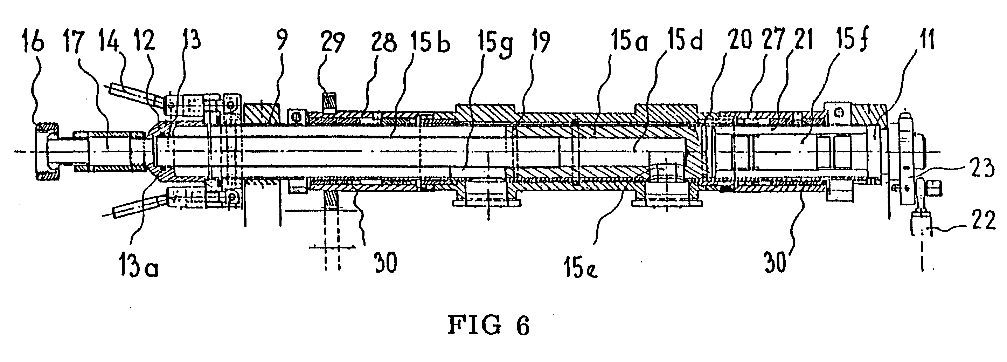

en fig. 3, le schéma de régulation de l'alimentation des pompes d'alimentation en fourrage,

en fig. 4, une vue schématique en élévation-coupe du poste de dépose de fourrage,

en fig. 5, une coupe transversale suivant AA correspondant à la fig. 4, le distributeur rotatif supposé enlevé, et

en fig. 6, une vue en élévation-coupe de l'ensemble du poste de dépose.

Telle que représentée en fig. 1 et 2, la machine comporte deux dispositifs convoyeurs équipés de deux chaînes à taquets 1 parallèles, entraînées au moyen de roues dentées 2 calées sur un arbre 3 entraîné en rotation à l'aide d'un motoréducteur 4 par l'intermédiaire d'une chaîne de transmission 5. Chaque dispositif convoyeur dessert, dans l'ordre successif d'intervention, un poste d'alimentation en biscuits amont 6, un poste de dépose de fourrage 7 et un poste d'alimentation en biscuits aval 8. Les postes d'alimentation sont équipés de dispositifs décrits dans le document FR-A N° 2507583, publié le 17.12.1982, déposé par la société titulaire, permettant une régulation automatique du transfert en file des biscuits et comportant à cet effet un appareil débiteur amont fournissant les biscuits avec un tassement constant et une vitesse réglable, et les acheminant par une gouttière de trajectoire descendante en direction des chaînes à taquets 1, laquelle gouttière est prolongée par une goulotte arrondie vers le bas et raccordée à un puits débouchant au-dessus du dispositif transporteur, l'insuffisance d'alimentation de la gouttière ou, inversement, un tassement exagéré des biscuits dans cette dernière engendrant, respectivement, un écart par défaut ou par excès par rapport à une hauteur de consigne, lequel écart est capté par un détecteur en liaison avec le circuit de commande de vitesse du moteur à vitesse réglable d'entraînement du transporteur d'alimentation. Le poste de dépose de fourrage est constitué d'un cylindre de distribution fixe 9 d'axe horizontal disposé perpendiculairement par rapport au déplacement des dispositifs transporteurs et reposant, par chacune de ses extrémités, sur deux appuis solidaires de la machine. Ce cylindre porte, à un écartement correspondant à celui des files de biscuits à enduire, des lumières de distribution 10 alignées sur une génératrice. Le cylindre 9 est limité, à une de ses extrémités, par un palier 11 et, à l'autre extrémité, par une boîte ou tubulure d'alimentation 12 comportant un palier 13, la liaison de cette dernière avec le cylindre s'effectuant à l'aide d'un assemblage par brides avec boulons basculants 14 permettant un démontage rapide pour le nettoyage de l'ensemble de distribution. Coaxialement au cylindre de distribution et à l'intérieur de celui-ci est monté un dispositif d'obturation 15 en appui sur les paliers 11 et 13, dont la rotation selon une certaine amplitude angulaire permet d'interrompre la distribution de fourrage. Ce dispositif d'obturation monobloc est constitué d'une partie centrale cylindrique 15a s'ajustant dans l'alésage du cylindre de distribution, cette partie centrale étant prolongée, du côté boîte d'alimentation 12 du cylindre, par un arbre creux 15b tourillonnant dans le palier 13 de celle-ci et, du côté opposé, par un arbre 15c tourillonnant dans le palier 11 situé à l'extrémité opposée à la boîte d'alimentation. L'arbre creux 15b prolonge un alésage axial 15d de la partie centrale 15a, lequel alésage débouche sur le cylindrage extérieur de celle-ci par un orifice d'équerre 15e de forme et de dimensions identiques à celles des lumières de distribution 10. L'extrémité libre de l'arbre creux 15b tourillonnant dans le palier 13 de la boîte d'alimentation 12 est en liaison avec une arrivée de fourrage 16 disposée dans l'axe de ladite boîte, par l'intermédiaire d'une manchette souple de raccordement 17. Le palier 13 est équipé d'un joint d'étanchéité 13a. Un piquage oblique 18 disposé sur la boîte d'alimentation, sur lequel se fixe également une manchette de raccordement, constitue une seconde arrivée de fourrage indépendante de l'arrivée 16, cette seconde arrivée débitant dans le volume annulaire compris entre l'alésage du cylindre de distribution 9 et l'arbre creux 15b du dispositif d'obturation, ce volume alimentant la lumière de distribution 10 la plus proche de la boîte d'alimentation 12. Le cylindrage extérieur de la partie centrale 15a du dispositif d'obturation comporte, d'une part, une bague d'étanchéité 19 interdisant tout passage de fourrage vers la lumière de distribution 10 la plus éloignée de la boîte de distribution, cette lumière étant alimentée par l'orifice 15e de ladite partie centrale, et, d'autre part, une bague d'étanchéité 20 interdisant toute fuite de fourrage vers le volume annulaire 21 situé en arrière de la partie centrale, entre l'alésage du cylindre de distribution 9 et l'arbre d'entraînement 15f du dispositif d'obturation. La partie centrale 15a porte sur sa face avant, côté boîte d'alimentation, un secteur cylindrique 15g dont la hauteur est déterminée de façon à pouvoir obturer la lumière de distribution 10 la plus proche de ladite boîte d'alimentation. L'obturation simultanée des deux lumières 10 est obtenue par une rotation angulaire limitée de l'ensemble du dispositif obturateur à l'aide d'un vérin pneumatique 22 agissant sur un bras 23 monté à l'extrémité de l'arbre 15f, ledit vérin étant commandé par l'arrêt et la remise en route de la machine. Le distributeur rotatif 24 monté coaxialement au cylindre de distribution 9 comporte sur un certain nombre de génératrices radialement réparties à intervalles égaux des buses de diffusion 25, d'écartement égal à celui des lumières de distribution 10, la rotation du distributeur mettant en communication lesdites buses et lumières. Des bagues d'étanchéité 26 interdisent toute fuite de fourrage vers l'extérieur du dispositif de distribution. Le distributeur rotatif est accouplé, à une de ses extrémités, à un manchon cylindrique 27 et, à l'autre extrémité, à un autre manchon cylindrique d'entraînement 28 portant à cet effet un pignon denté 20 engrenant avec la chaîne 5 assurant l'entraînement des dispositifs convoyeurs à partir du motoréducteur 4, cette disposition permettant la synchronisation de la vitesse de rotation du distributeur avec la vitesse de défilement des biscuits. A ce dispositif de synchronisation est annexé un dispositif, de type connu, permettant d'ajuster la phase de dépose du fourrage par rapport au biscuit. Les manchons d'entraînement 27 et 28 tourillonnent sur des bagues d'usure 30 en Ertalène interposées entre le cylindre de distribution et le distributeur rotatif.

L'alimentation en fourrage des arrivées 16 et 18 de la boîte d'alimentation 12 s'effectue à l'aide de pompes volumétriques ou pompes à lobes 31 et 32 dont la vitesse de rotation est synchronisée avec la vitesse d'entraînement en translation des chaînes à taquets 1 des dispositifs convoyeurs. La liaison mécanique entre lesdites pompes et le motoréducteur 4 d'entraînement des chaînes comporte des dispositifs d'embrayage 33 associés à un dispositif variateur de vitesse 34. Ces embrayages permettent, au démarrage de la machine, de ne faire fonctionner que les pompes 31 et 32, les chaînes du convoyeur étant stoppées jusqu'à l'obtention d'une arrivée correcte du bourrage aux buses de diffusion 25 du distributeur rotatif. Le variateur 34 permet d'ajuster en marche le débit du fourrage par rapport à celui des biscuits.

La fig. 3 représente le schéma du dispositif de régulation permettant de maintenir en amont des pompes à lobes 31 et 32 une pression constante. Ce schéma regroupe l'ensemble des appareils et circuits de canalisations permettant l'alimentation du cylindre de distribution du poste de dépose soit en confiture, soit en crème. Cet ensemble est constitué d'un stockage 33 contenant le fourrage, lequel est repris en partie basse par une pompe d'extraction 34 en liaison avec un régulateur de pression 35, du type à membrane, faisant office d'accumulateur, lui-même en liaison avec soit un mélangeur 36, dans le cas de la confiture, soit une capacité de réserve 37, dans le cas de la crème. Sur le mélangeur 36 aboutissent les arrivées d'arôme 38 et d'acide 39, ces additifs étant introduits par le refoulement d'une pompe doseuse 40 à travers des clapets de non-retour 41 et 42, laquelle pompe doseuse est asservie à la pompe à lobes 32. Des vannes à trois voies 43 et 44 permettent l'alimentation du cylindre de distribution par l'un ou l'autre des circuits crème ou confiture. Les déplacements de la membrane du régulateur accumulateur de pression 35 commandent les variations de vitesse ou l'arrêt de la pompe d'extraction 34, ainsi que l'arrêt de la pompe 31 ou 32. A cet effet, la membrane est solidaire d'une tige coulissante 45 portant un index, lequel agit, au cours de son déplacement en translation, sur des contacts électriques de commande. C'est ainsi qu'une élévation de pression dans le volume situé sous la membrane entraîne une déformation de celle-ci vers le haut, forçant la tige 45 à remonter, l'index agissant sur un contact commandant un ralentissement de la vitesse de rotation de la pompe d'extraction 34; le contact moins vite est maintenu par un système d'aimant tant que la tige monte. Dans le cas d'une surpression excessive entraînant une remontée importante de la tige 45, l'index intervient alors sur un autre contact commandant l'arrêt de ladite pompe d'extraction; ces contacts sont rompus dés que la tige redescend. Inversement, une baisse de pression dans le volume situé sous la membrane déforme celle-ci vers le bas. L'index de la tige 45 commande dans ce cas une accélération de la vitesse de rotation de la pompe d'extraction par un contact maintenu au cours de la descente de la tige; lorsque cette baisse de pression s'accentue, l'index intervient sur un contact stoppant les pompes à lobes 31 et 32.

La machine objet de l'invention peut être utilisée pour la fabrication de tous produits enduits, tels que les biscuits enduits de crème, de chocolat ou de confiture.

**Revendications**

1. Machine permettant la fabrication de produits enduits d'une couche de matière appelée fourrage, tels que des biscuits garnis d'une couche de fourrage, comportant deux dispositifs transporteurs à chaînes (1) juxtaposés, chacun d'eux desservant, dans l'ordre, un poste amont (6) d'alimentation en produits à enduire, un poste de dépose du fourrage (7), éventuellement un poste aval (8) d'alimentation en produits, chaque poste de dépose (7) comportant au moins une lumière (10) de distribution ménagée à l'aplomb d'une file de produits dans un cylindre de distribution transversal fixe (9), cylindre dans lequel est logé un dispositif obturateur coaxial (15) dont la commande de rotation, d'amplitude limitée, par un vérin pneumatique (22) lié à l'arrêt de la machine et à sa remise en service, obture ou met en communication les lumières de distribution (10) du cylindre avec les buses de diffusion (25) d'un distributeur rotatif (24) ceinturant ledit cylindre, ladite machine, comportant en outre des moyens de régulation de l'alimentation des transporteurs aux postes amont (6) et aval (8), étant caractérisée en ce que, d'une part, l'alimentation en fourrage de chacun des deux postes de dépose de fourrage (7) s'effectue, respectivement, par une arrivée indépendante (16, 18) reliée à une pompe volumétrique distincte (31, 32) permettant d'obtenir une équivalence de débit des flux d'enduction de fourrage à chacune des buses de diffusion (25) du distributeur rotatif (24), en ce que, d'autre part, la vitesse de rotation des pompes volumétriques (31, 32) alimentant en fourrage les postes de dépose (7) est synchronisée avec la vitesse d'entraînement des chaînes (1) des dispositifs convoyeurs, afin d'assurer une régulation de débit desdits flux d'enduction pour obtenir une épaisseur uniforme de fourrage déposée quelle que soit la vitesse de défilement des produits, le dispositif de synchronisation permettant d'une part, au démarrage, de faire fonctionner seules lesdites pompes (31, 32) jusqu'à l'arrivée correcte du fourrage aux buses de diffusion (25) du distributeur rotatif (24) avant toute arrivée des produits, et d'autre part d'ajuster, en marche, le rapport entre le débit de fourrage et le débit des produits, laquelle machine est également caractérisée en ce qu'elle comporte en outre un dispositif de régulation de la pression de fourrage permettant de maintenir en amont des pompes volumétriques (31, 32) d'alimentation en fourrage du cylindre de distribution (9) une pression constante nécessaire à leur bon fonctionnement.

2. Machine selon la revendication 1, caractérisée en ce que le cylindre de distribution (9) est limité, à une de ses extrémités, par une boîte de distribution (12) comportant une arrivée centrale de fourrage (16) formant palier et une arrivée oblique (18), toutes deux en liaison avec le refoulement des pompes volumétriques d'alimentation en fourrage (31, 32) par l'intermédiaire de manchettes souples (17), l'arrivée centrale formant palier débitant dans un arbre creux (15b) prolongeant un alésage axial (15d) du corps du dispositif obturateur (15) ajusté tournant dans le cylindre de distribution (9), lequel alésage (15d) débouche sur le cylindrage extérieur du corps par un orifice d'équerre (15e), de forme et de dimensions identiques à celles de la lumière de distribution (10) du cylindre la plus éloignée de la boîte de distribution, et dans laquelle lumière (10) il débite en position d'ouverture de l'obturateur (15), l'arrivée oblique (18) débitant dans le volume annulaire compris entre l'alésage du cylindre de distribution (9) et l'arbre creux (15b) d'arrivée centrale prolongeant le dispositif obturateur, lequel volume annulaire alimente la lumière de distribution (10) la plus proche de la boîte de distribution (12), un joint d'étanchéité (19) étant prévu sur le corps du dispositif obturateur (15) pour éviter tout risque d'intercommunication entre les lumières (10) du cylindre de distribution, ainsi que des joints d'étanchéité (20) sur les surfaces de liaison en rotation du corps du dispositif obturateur avec l'alésage du cylindre de distribution (9) et de l'arbre creux avec l'arrivée centrale formant palier.

3. Machine selon l'une des revendications 1 ou 2, caractérisée en ce que le corps du dispositif obturateur (15) comporte, sur sa face côté boîte d'alimentation, un secteur cylindrique (15g) de valeur angulaire et de hauteur déterminées de façon à pouvoir obturer, après rotation du dispositif, la lumière (10) du cylindre de distribution (9) la plus proche de ladite boîte d'alimentation.

4. Machine selon la revendication 1, caractérisée en ce que le moyen de régulation du débit des flux d'enduction, assurant une épaisseur uniforme de fourrage déposée quelle que soit la vitesse de défilement des produits à enduire, consiste dans la synchronisation de la vitesse de rotation des pompes volumétriques (31, 32) d'alimentation, du type pompes à lobes par exemple, avec la vitesse d'entraînement des chaînes (1) des dispositifs convoyeurs par une liaison mécanique entre lesdites pompes et le moteur d'entraînement (4) des chaînes, comportant des dispositifs d'embrayage (33) associés à un dispositif variateur de vitesse (34), les dispositifs d'embrayage (33) permettant éventuellement, au démarrage de la machine, de ne faire fonctionner que les pompes (31, 32), les chaînes du convoyeur étant stoppées, dans le but d'obtenir une arrivée correcte du fourrage aux buses de diffusion (25) du distributeur rotatif avant toute arrivée de produits, le dispositif variateur (34) permettant d'ajuster, en marche, le débit du fourrage par rapport à celui des produits.

5. Machine selon la revendication 1, caractérisée en ce que le dispositif de régulation permettant de maintenir en amont des pompes volumétriques (31, 32) d'alimentation en fourrage une pression constante est constitué d'un régulateur (35) à membrane faisant office d'accumulateur de pression, interposé entre une pompe d'extraction (34) annexée à un stockage du fourrage et les pompes volumétriques (31, 32), les déplacements de la membrane du régulateur accumulateur de pression (35) commandant, selon les cas, les variations de vitesse ou l'arrêt de la pompe d'extraction (34), ainsi que l'arrêt des pompes volumétriques (31, 32) d'alimentation.

6. Machine selon l'une des revendications 1 ou 5, caractérisée en ce que la membrane du régulateur accumulateur de pression (35) est solidaire d'une tige coulissante (45) portant un index agissant, au cours du déplacement en translation de la tige (45) par déformation de la membrane, sur des contacteurs électriques de commande en liaison avec la pompe d'extraction (34) et avec les pompes volumétriques (31, 32) d'alimentation, les contacts étant maintenus, par un système d'aimant, pendant la durée de translation de la tige (45), dans un même sens et rompus dès l'inversion du sens de défilement de celle-ci.

7. Machine selon l'une des revendications 1, 5 ou 6, caractérisée en ce que sur la liaison entre le régulateur accumulateur de pression (35) et les pompes volumétriques (31, 32) d'alimentation est monté un mélangeur (36) comportant des arrivées d'additifs tels qu'arômes (38) ou acides (39), introduits dans ledit mélangeur (36) par refoulement d'une pompe doseuse (40) à travers des clapets de non-retour (41, 42), laquelle pompe doseuse (40) est asservie aux pompes volumétriques (31, 32) d'alimentation afin d'assurer un gavage constant desdites pompes.

8. Machine selon l'une des revendications 1, 5 ou 6, caractérisée en ce que sur la liaison entre le régulateur accumulateur de pression (35) et les pompes volumétriques (31, 32) d'alimentation est montée une capacité de réserve (37) assurant d'une façon constante le gavage desdites pompes.

**Claims**

1. Machine enabling the production of products coated with a layer of material, called a coating, such as biscuits provided with a coating layer, comprising two chain conveyor devices (1) which are placed next to one another, each serving, in order, an upstream station (6) supplying products to be coated, a station depositing the coating (7) and, if appropriate, a downstream product supply station (8), each depositing station (7) possessing at least one distribution aperture (10) made plumb with a row of products in a fixed transversal distribution cylinder (9), in which is accommodated a coaxial shut-off device (15) which, when its rotation of limited amount is controlled by a pneumatic jack (22) linked to the stopping of the machine and to its restarting, shuts off the distribution apertures (10) of the cylinder or puts them in communication with spreading nozzles (25) of a rotary distributor (24) encircling the said cylinder, the said machine also possessing means of regulating the supply from the conveyors to the upstream (6) and downstream stations (8) and being characterised in that, on the one hand, each of the two coating-depositing stations (7) is supplied with coating *via* an independent intake (16, 18) connected to a separate volumetric pump (31, 32), making it possible to obtain equivalent coating flow rates at each of the spreading nozzles (25) of the rotary distributor (24), and in that, on the other hand, the rotational speed of the volumetric pumps (31, 32) supplying the depositing stations (7) with coating is synchronised with the drive speed of the chains (1) of the conveyor devices so as to ensure regulation of the said coating flow rate to achieve a uniform thickness of the deposited coating, whatever the speed of passage of the products, the synchronising device making it possible, on the one hand, when starting, to operate only the said pumps (31, 32) up to the correct arrival of the coating at the spreading nozzles (25) of the rotary distributor (24), before any arrival of the products, and, on the other hand, to adjust, during operation, the ratio between the coating flow rate and the flow rate of the products, the said machine likewise being characterised in that it also incorporates a device for regulating the coating pressure, making it possible to maintain, upstream of the volumetric pumps (31, 32) supplying coating to the distribution cylinder (9), a constant pressure necessary for their proper operation.

2. Machine according to Claim 1, characterised in that the distribution cylinder (9) is limited, at one of its ends, by a distribution box (12) possessing a central coating intake (16), forming a bearing, and an oblique intake (18), both connected to the delivery of the volumetric coating-supply pumps (31, 32) by means of flexible sleeves (17), the central intake, which forms a bearing, discharging into a hollow shaft (15b) extending an axial bore (15d) in the body of the shut-off device (15) set to rotate in the distribution cylinder (9), the said bore (15d) opening onto the outer cylindrical surface of the body *via* a right-angled orifice (15e), having a form and dimensions identical to those of the distribution aperture (10) of the cylinder furthest away from the distribution box, and discharging into the said aperture (10) in the opening position of the shut-off device (15), the oblique intake (18) discharging into the annular volume contained between the bore of the distribution cylinder (9) and the hollow central-intake shaft (15b) extending the shut-off device, the said annular volume feeding the distribution aperture (10) nearest to the distribution box (12), a gasket (19) being provided in the shut-off body (15) to prevent any risk of intercommunication between the apertures (10) of the distribution cylinder, as well as gaskets (20) being provided on the surfaces connecting the body of the shut-off device in terms of rotation to the bore of the distribution cylinder (9) and connecting the hollow shaft in terms of rotation to the central intake forming a bearing.

3. Machine according to one of Claims 1 or 2, characterised in that the body of the shut-off device (15) possesses, on its face on the same side as the supply box, a cylindrical sector (15g) of specific angular value and height, so as to be capable, after rotation of the device, of shutting off the aperture (10) of the distribution cylinder (9) which is nearest to the said supply box.

4. Machine according to Claim 1, characterised in that the means of regulating the coating flow rate, ensuring a uniform thickness of the deposited coating, whatever the speed of passage of the products to be coated, involves synchronising the rotational speed of the volumetric supply pumps (31, 32), for example of the lobed-pump type, with the drive speed of the chains (1) of the conveyor devices by means of a mechanical connection between the said pumps and the drive motor (4) of the chains, comprising engagement devices (33) connected to a speed variator device (34), the engagement devices (33) making it possible, if appropriate, when the machine is started, to operate only the pumps (31, 32) with the chains of the conveyor being stopped, in order to obtain the correct intake of the coating at the spreading nozzles (25) of the rotary distributor, before any arrival of products, the variator device (34) making it possible to adjust, during operation, the coating flow rate in relation to the flow rate of the products.

5. Machine according to Claim 1, characterised in that the regulating device, which makes it possible to maintain a constant pressure upstream of the volumetric coating-supply pumps (31, 32), consists of a diaphragm regulator (35) which acts as a pressure accumulator, and which is interposed between an extraction pump (34) attached to a stock of coating and the volumetric pumps (31, 32), the displacements of the diaphragm of the pressure-accumulating regulator (35) controlling, as the case may be, speed variations or the stopping of the extraction pump (34), as well as the stopping of the volumetric supply pumps (31, 32).

6. Machine according to one of Claims 1 or 5, characterised in that the diaphragm of the pressure-accumulating regulator (35) is integral with a sliding rod (45) carrying an index which, during the translational displacement of the rod (45) as a result of the deformation of the diaphragm, acts on electrical contactors controlling the connection to the extraction pump (34) and to the volumetric supply pumps (31, 32), the contacts being maintained in one and the same direction by means of a magnet system, during the period of translation of the rod (45), and being broken as soon as the direction of movement of the latter is reversed.

7. Machine according to one of Claims 1, 5 or 6, characterised in that there is, mounted on the connection between the pressure-accumulating regulator (35) and the volumetric supply pumps (31, 32), a mixer (36) which incorporates intakes of additives, such as aromas (38) or acids (39), introduced into the said mixer (36) as a result of the delivery of a metering pump (40) *via* non-return valves (41, 42), the said metering pump (40) being controlled by the volumetric supply pumps (31, 32) to ensure constant cram-feeding of the said pumps.

8. Machine according to one of Claims 1, 5 or 6, characterised in that there is, mounted on the connection between the pressure-accumulating regulator (35) and the volumetric supply pumps (31, 32), a reserve volume (37) which ensures constant cram-feeding of the said pumps.


**Patentansprüche**

1. Maschine zur Herstellung von Produkten, die mit einer als Füllung bezeichneten Materialschicht versehen sind, wie von Keksen, die mit einer Füllungsschicht garniert sind, mit zwei nebeneinanderliegenden Kettentransporteinrichtungen (1), von denen jede nacheinander ein aufstromwärts gelegenes Gerät (6) zur Einspeisung von zu beschichtenden Produkten, ein Gerät zur Ablagerung von Füllung (7) und ggf. ein abstromwärts gelegenes Gerät (8) zur Einspeisung von Produkten versorgt, wobei jedes Ablagerungsgerät (7) wenigstens eine Verteilungsöffnung (10) besitzt, welche senkrecht zu einer Reihe von Produkten in einem querliegenden feststehenden Verteilungszylinder (9) angebracht ist, in dem eine koaxiale Verschlusseinrichtung (15) angeordnet ist, deren Steuerung der begrenzten Drehung durch einen Pneumatikzylinder (22), der mit dem Anhalten der Maschine und ihrem Wiederinbetriebnehmen gekoppelt ist, die Verteilungsöffnungen (10) des Zylinders verschliesst oder in Verbindung mit den Ausbreitungsdüsen (25) eines diesen Zylinder umgebenden drehbaren Verteilers (24) bringt, wobei die Maschine ausserdem Steuereinrichtungen für die Beschickung der Transporteinrichtungen zu den aufstromwärts gelegenen (6) und abstromwärts gelegenen (8) Geräten aufweist, dadirch gekennzeichnet, dass einerseits due Füllungsbeschickung jedes der beiden Geräte zur Füllungsablagerung (7) jeweils durch einen unabhängigen Eingang (16, 18) erfolgt, der mit einer getrennten volumetrischen Pumpe (31, 32) verbunden ist, die es gestattet, eine Gleichwertigkeit des Durchsatzes des Flusses der Füllungsbeschichtung zu jeder der Ausbreitungsdüsen (25) des Drehverteilers (24) zu erhalten, und dass andererseits die Geschwindigkeit der Drehung der volumetrischen Pumpen (31, 32), die die Ablagerungsgeräte (7) mit Füllung beschicken, mit der Antriebsgeschwindigkeit der Ketten (1) der Fördereinrichtungen synchronisiert ist, um eine Steuerung des Durchsatzes des Beschichtungsflusses zu gewährleisten, und um so eine gleichmässige Dicke der abgelagerten Füllung unabhängig von der Geschwindigkeit des Vorbeilaufens der Produkte zu erhalten, wobei die Synchronisationseinrichtung gestattet, dass einerseits beim Start nur diese Pumpen (31, 32) bis zum genauen Ankommen der Füllung an den Ausbreitungsdüsen (25) des Drehverteilers (24) vor der Ankunft der Produkte arbeiten und dass andererseits im Betrieb das Verhältnis zwischen dem Füllungs- und dem Produktdurchsatz eingestellt wird, wobei die Maschine auch dadurch gekennzeichnet ist, dass sie ausserdem eine Steuereinrichtung für den Druck besitzt, die es gestattet, aufstromwärts von den volumetrischen Pumpen (31, 32) für die Füllungsbeschickung des Verteilungszylinders (9) einen konstanten Druck aufrechtzuerhalten, der für ihr gutes Funktionieren erforderlich ist.

2. Maschine nach Anspruch 1, dadurch gekennzeichnet, dass der Verteilungszylinder (9) an einem seiner Enden durch einen Verteilungskasten (12) begrenzt ist, der einen mittigen, eine Welle bildenden Eintritt für Füllung (16) und einen schrägen Eintritt (18) besitzt, beide in Verbindung mit der Fördermenge der volumetrischen Pumpen für die Einspeisung von Füllung (31, 32) mittels elastischer Manschetten (17), wobei der mittige Eintritt eine Welle bildet, die in eine Hohlwelle (15b) mündet, welche eine Axialbohrung (15d) des Körpers der Verschlusseinrichtung (15) verlängert, die drehbar in dem Verteilungszylinder (9) ausgerichtet ist, die Bohrung (15d) auf dem Zylinderumfang des Körpers durch eine rechtwinklige Öffnung (15e) mit einer Form und mit Abmessungen gleich denen der Verteilungsöffnung (10) des Zylinders, die am weitesten von dem Verteilungskasten entfernt ist, endet, wobei sie in diese Öffnung (10) in der Öffnungsposition des Verschlusses (15) mündet, der schräge Eintritt (18) in das Ringvolumen mündet, das zwischen der Bohrung des Verteilungszylinders (9) und der Hohlwelle (15b) des mittigen Eintrittes, die die Verschlusseinrichtung verlängert, enthalten ist, wobei dieses Ringvolumen die Verteilungsöffnung (10), die dem Verteilungskasten (12) am nächsten liegt, speist, eine Dichtung (19) auf dem Körper der Verschlusseinrichtung (15) vorgesehen ist, um jede Gefahr einer Wechselbeziehung zwischen den Öffnungen (10) des Verteilungszylinders ebenso zu vermeiden, sowie Dichtungen (20) auf den Verbindungsoberflächen in Rotation des Körpers der Verschlusseinrichtung mit der Bohrung des Verteilungszylinders (9) und der Hohlwelle mit dem die Welle bildenden mittigen Eingang.

3. Maschine nach einem der Ansprüche 1 oder 2, dadurch gekennzeichnet, dass der Körper der Verschlusseinrichtung (15) auf der Seitenfläche seines Beschickungskastens einen Zylinderabschnitt (15g) mit solchem Winkelwert und solcher Höhe hat, die derart bestimmt sind, dass nach Drehung der Einrichtung die Öffnung (10) des Verteilungszylinders (9), die dem Beschickungskasten am nächsten liegt, geschlossen werden kann.

4. Maschine nach Anspruch 1, dadurch gekennzeichnet, dass das Mittel zur Steuerung des Durchsatzes des Beschichtungsflusses, die eine gleichmässige Dicke der abgelagerten Füllung unabhängig von der Geschwindigkeit des Vorbeilaufens der zu beschichtenden Produkte gewährleistet, in der Synchronisation der Drehgeschwindigkeit der volumetrischen Beschickungspumpen (31, 32), beispielsweise vom Flügelpumpentyp, mit der Antriebsgeschwindigkeit der Ketten (1) der Fördereinrichtung durch eine mechanische Verbindung zwischen diesen Pumpen und dem Antriebsmotor (4) der Ketten besteht, die Kupplungseinrichtungen (33) aufweist, welche mit einer geschwindigkeitsverändernden Einrichtung (34) verbunden sind, wobei die Kupplungseinrichtungen (33) ggf. gestatten, dass beim Anlaufen der Maschine nur die Pumpen (31, 32) arbeiten, während die Ketten der Fördereinrichtung stillstehen, mit dem Ziel, ein genaues Ankommen der Füllung an den Verteilerdüsen (25) des drehbaren Verteilers vor der Ankunft der Produkte zu bekommen, und wobei die geschwindigkeitsverändernde Einrichtung (34) es gestattet, beim Betrieb den Durchsatz der Füllung im Verhältnis zu jenem der Produkte einzustellen.

5. Maschine nach Anspruch 1, dadurch gekennzeichnet, dass die Steuereinrichtung, die es gestattet, auftromwärts von den volumetrischen Pumpen (31, 32) zur Füllungsbeschickung einen konstanten Druck aufrechtzuerhalten, aus einem Membranregler (35) besteht, der als Druckspeicher dient, der zwischen einer Extraktionspumpe (34), die mit einem Füllungsspeicher verbunden ist, und den volumetrischen Pumpen (31, 32) zwischengeschaltet ist, wobei die Verlagerungen der Membran des Druckspeicherreglers (35) fallweise die Geschwindigkeitsveränderungen oder das Anhalten der Extraktionspumpe (34) ebenso wie das Anhalten der volumetrischen Einspeispumpen (31, 32) steuern.

6. Maschine nach einem der Ansprüche 1 oder 5, dadurch gekennzeichnet, dass die Membran des Druckspeicherreglers (35) formschlüssig mit einem Gleitstab (45) ist, der einen Zeiger trägt, welcher im Verlauf der Verschiebung des Stabes (45) durch Deformation der Membran auf elektrische Steuerschalter in Verbindung mit der Extraktionspumpe (34) und mit den volumetrischen Beschickungspumpen (31, 32) einwirkt, wobei die Kontakte durch ein Magnetsystem während der Dauer der Verschiebung des Stabes (45) im gleichen Sinne gehalten und ab der Umkehr der Richtung des Vorbeilaufens desselben unterbrochen werden.

7. Maschine nach einem der Ansprüche 1, 5 oder 6, dadurch gekennzeichnet, dass auf der Verbindung zwischen dem Druckspeicherregler (35) und den volumetrischen Beschickungspumpen (31, 32) ein Mischer (36) befestigt ist, der Eintritte für Zusatzstoffe, wie Aromastoffe (38) oder Säuren (39), besitzt, welche in diesen Mischer (36) durch Förderung einer Dosierpumpe (40) über Rückschlagventile (41, 42) eingeführt werden, wobei die Dosierpumpe (40) in Abhängigkeit von den volumetrischen Beschickungspumpen (31, 32) steht, um eine konstante Beladung dieser Pumpen zu gewährleisten.

8. Maschine nach einem der Ansprüche 1, 5 oder 6, dadurch gekennzeichnet, dass auf der Verbindung zwischen dem Druckspeicherregler (35) und den volumetrischen Beschickungspumpen (31, 32) eine Leistungsreserve (37) befestigt ist, die in konstanter Weise die Beladung dieser Pumpen gewährleistet.

FIG 2

FIG 1

**FIG 3**

**FIG 4**          **FIG 5**

16 17 14 12 13     9   29   28 15b   15g 19    15a 15d   20 27 21   15f    11

15

13a

30

15e

30

23

22

0 082 085

FIG 6